# EUROPEAN PATENT APPLICATION

(11) **EP 2 675 225 A1**
(43) Date of publication of application: **18.12.2013**
(21) Application number: 12744287.9
(22) Date of filing: 03.02.2012
(51) Int. Cl.: H04W 72/04, H04W 72/08, H04W 84/10

(54) **BASE STATION DEVICE AND TRANSMITTING METHOD**

(30) Priority: 10.02.2011 JP 2011027449
(71) Applicant: Panasonic Corporation, Osaka 571-8501 (JP)
(72) Inventor: LI, Jifeng, Osaka 540-6207 (JP); NANRI, Masahiko, Osaka 540-6207 (JP); KOIDE, Yasuo, Osaka 540-6207 (JP)
(74) Representative: Grünecker, Kinkeldey, Stockmair & Schwanhäusser
(86) International application number: PCT/JP2012/000732
(87) International publication number: WO 2012/108155

(57) **Abstract**

The present invention provides a base station device capable of improving the throughput of a whole network by minimizing interference between respective base stations. In a communication system including a plurality of base stations, which transmit a signal by using any of a plurality of different ABS patterns which are sub frame ABS patterns represented by the combination of a transmission sub frame for transmitting a signal and a non-transmission sub frame for suspending the transmission of the signal, a determining unit (104), on the basis of the presence or absence of the interference between an HeNB (100) and other base stations except for the HeNB (100), determines the ABS pattern used by the HeNB (100) from among the plurality of ABS patterns, and a transmitting unit (105) transmits a signal to a terminal connected to the HeNB (100); in accordance with the determined ABS pattern.

## Description

### Technical Field

The present invention relates to a base station apparatus and a transmission method.

### Background Art

In recent years, small cell base station apparatuses each used for forming a cell having a communication area smaller than a conventional cell have been developed for the purpose of eliminating the dead zones of mobile phones or improving the cell average throughput or cell edge throughput. Examples of such small cell base station apparatuses include "Pico eNB" and "Home eNB" (hereinafter, these base station apparatuses are collectively called "HeNB" for the sake of convenience). HeNBs are deployed for covering only restricted small areas such as homes or offices. Accordingly, HeNBs form a small cell as compared with the existing macro base station apparatuses, which form a cell having a large communication area ("Macro base station apparatus (Macro eNB) (hereinafter, referred to as "MeNB")). For this reason, HeNBs are less likely to involve congestion caused by traffic concentration and can be expected to achieve high throughput.

However, the users of HeNBs can change the installation locations of HeNBs (i.e., HeNBs installed in homes) to any location, so that it is difficult for telecommunication carriers to manage the operational states of HeNBs. In addition, since HeNBs use the same frequency band as an MeNB (Macro base station), interference between the MeNB and HeNBs is a problem.

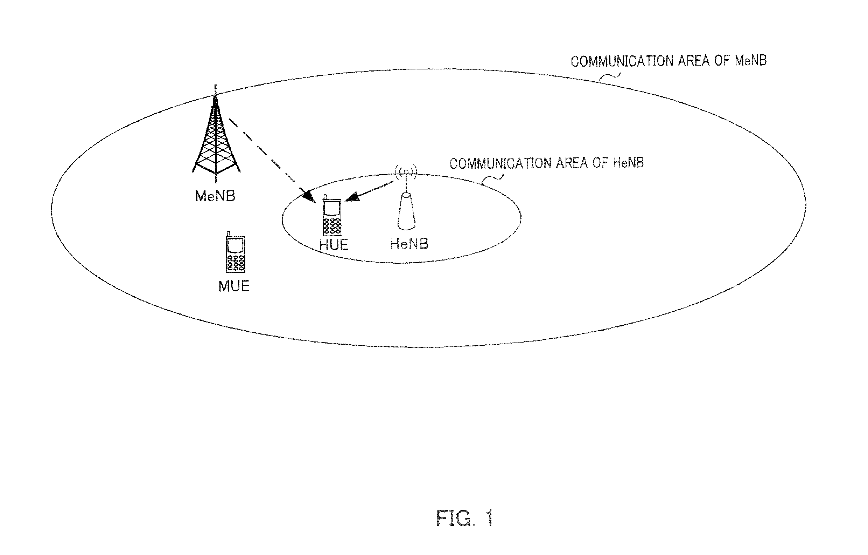

FIG. 1 is a diagram provided for describing interference between an HeNB and an MeNB. In FIG. 1, one HeNB is installed in the communication area of the MeNB, and a mobile station communicating with the MeNB (Macro User Equipment (hereinafter, abbreviated as "MUE")) is located in the communication area ((i.e., located within the cell)) of the MeNB. In addition, another mobile station communicating with the HeNB (Home User Equipment (hereinafter, abbreviated as "HUE")) is located in the communication area ((i.e., located within the cell)) of the HeNB.

If the distance between the MeNB and HeNB is relatively short in FIG. 1, the HUE receives not only a downlink signal from the HeNB, which is a desired wave (solid line), but also a downlink signal from the MeNB, which is an interference wave (broken line). In this case, the reception quality of the HUE is degraded, which results in a decrease in throughput. Likewise, when the MUE illustrated in FIG. 1 moves closer to the communication area of the HeNB, the MUE receives not only a downlink signal (desired wave) from the MeNB but also a downlink signal (interference wave) from the HeNB. In this case, the MUE is interfered by the signal from the HeNB, and the reception quality of the MUE is degraded, which results in a decrease in throughput.

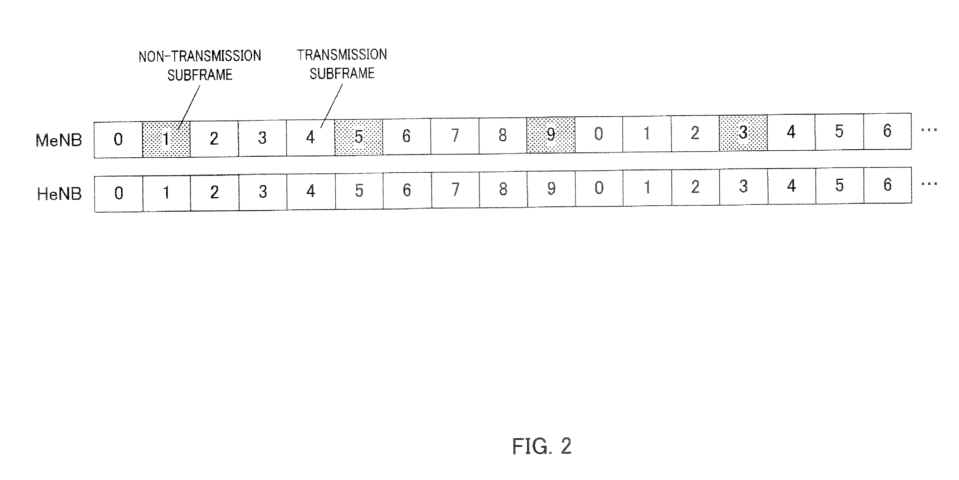

As a solution to this problem, a method called "Almost Blank Subframe" (ABS) disclosed in Non-Patent Literature (hereinafter, abbreviated as "NPL") 1 has been discussed, for example. In the ABS disclosed in NPL 1, the MeNB periodically stops downlink transmission. In FIG. 2, the MeNB sets a non-transmission subframe at every fourth subframe to stop downlink transmission. Thus, the interfered base station (victim, which is the HeNB in FIG. 2) is no longer interfered in a subframe where the interfering base station (aggressor, which is the MeNB in FIG. 2) stops transmission (in non-transmission subframes illustrated in FIG. 2). As a result, the throughput of a UE located in the cell provided by the interfered base station is improved.

### Citation List

### Non-Patent Literature

NPL 1
   R1-105779 "Way Forward on time-domain extension of Re1 8/9 backhaul-based ICIC" (RAN 1)

### Summary of Invention

### Technical Problem

If transmission is stopped by using ABSs as illustrated in NPL 1, the throughput unfavorably decreases in the interfering base station (MeNB) due to non-transmission. In particular, as illustrated in NPL 1 (FIG. 2), if the MeNB having a wide coverage stops transmission, a large number of UEs (MUEs) are affected by the decrease in the throughput due to the non-transmission, which leads to a decrease in the throughput of the whole network.

It is an object of the present invention to provide a base station apparatus and a transmission method each of which makes it possible to improve the throughput of the whole network while limiting interference between base stations (MeNB and HeNB) to the minimum level.

### Solution to Problem

A base station apparatus according to a first aspect of the present invention in a communication system includes a plurality of base station apparatuses each being configured to transmit a signal using one of a plurality of different subframe configuration patterns, each of the plurality of different subframe configuration patterns being represented by a combination of a transmission subframe that transmits a signal and a non-transmission subframe that stops transmission of a signal, the base station apparatus including: a determining section configured to determine a subframe configuration pattern to be used in the base station apparatus of the determining section from among the plurality of subframe configuration patterns on a basis of the presence or absence of interference between the base station apparatus thereof and another one or more of the base station apparatuses; and a transmitting section configured to transmit a signal to a terminal apparatus connected to the base station apparatus of the transmitting section, in accordance with the determined subframe configuration pattern.

A transmission method according to a second aspect of the present invention in a communication system includes a plurality of base station apparatuses each configured to transmit a signal using one of a plurality of different subframe configuration patterns, each of the plurality of different subframe configuration patterns being represented by a combination of a transmission subframe that transmits a signal and a non-transmission subframe that stops transmission of a signal, the method including: determining a subframe configuration pattern to be used in a specific one of the base station apparatuses from among the plurality of subframe configuration patterns on a basis of the presence or absence of interference between the specific one of the base station apparatuses and another one or more of the base station apparatuses; and transmitting a signal to a terminal apparatus connected to the specific one of the base station apparatuses, in accordance with the determined subframe configuration pattern.

### Advantageous Effects of Invention

According to the present invention, it is possible to improve the throughput of the whole network while limiting interference between base stations (MeNB and HeNB) to the minimum level.

### Brief Description of Drawings

FIG. 1 is a diagram illustrating a configuration of a network system including an MeNB and an HeNB;
FIG. 2 is a diagram provided for describing ABS;
FIG. 3 is a diagram illustrating a configuration of a network system according to Embodiment 1 of the present invention;
FIG. 4 is a block diagram illustrating a configuration of a small cell base station according to Embodiment 1 of the present invention;
FIG. 5 is a diagram illustrating ABS patterns according to Embodiment 1 of the present invention;
FIG. 6 is a diagram illustrating an ABS white list according to Embodiment 1 of the present invention;
FIG. 7 is a flowchart illustrating processing performed by a small cell base station according to Embodiment 1 of the present invention; and
FIG. 8 is a diagram illustrating an example of how ABS configurations according to Embodiment 1 of the present invention are set.

### Description of Embodiments

Hereinafter, embodiments of the present invention will be described in detail with reference to the accompanying drawings.

### (Embodiment 1)

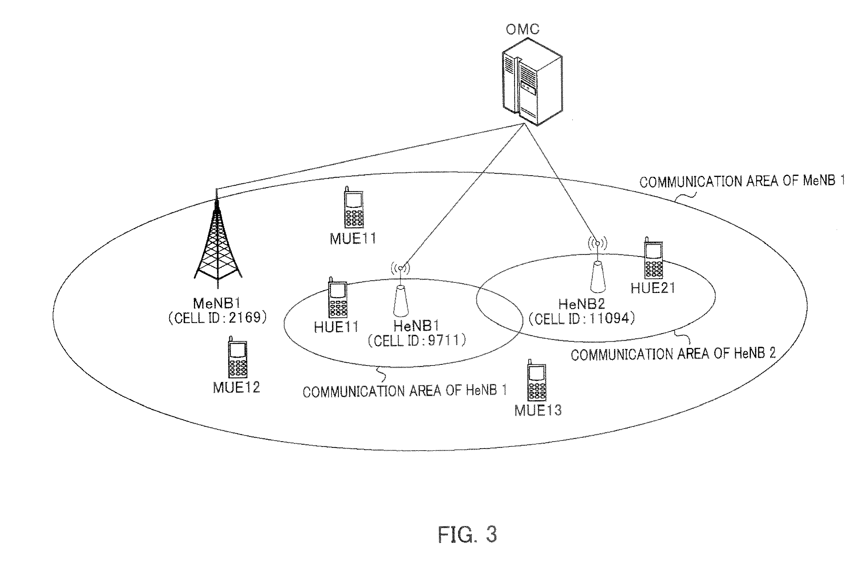

FIG. 3 illustrates a configuration example of a network system (communication system) according to Embodiment 1. As illustrated in FIG. 3, two HeNBs including HeNB 1 (cell ID=9711) and HeNB 2 (cell ID=11094) are installed in the communication area (cell range) of MeNB 1 (cell ID=2169). In addition, an assumption is made that HeNB 1 is in operation and HeNB 2 is not in operation (in power-off state) in FIG. 3. The term "cell ID" used herein refers to a number assigned to a specific base station. In addition, as illustrated in FIG. 3, MUEs 11 to 13 are located in the communication area of MeNB 1, while HUE 11 is located in the communication area of HENB 1, and HUE 21 is located in the communication area of HeNB 2. Each of the base stations (MeNB and HeNBs) located in the network system illustrated in FIG. 3 transmits signals using any of a plurality of different ABS patterns. The term "ABS pattern" used herein refers to a subframe configuration pattern represented by a combination of transmission subframes that transmit a signal and non-transmission subframes that stop transmission of a signal. In FIG. 3, an operation and maintenance center (OMC) is connected to each of MeNB 2 and MeNB 3 (not illustrated) in addition to MeNB 1, HeNB 1 and HeNB 2, and is a management apparatus having a function to manage the setting information on the ABS patterns of the respective base station apparatuses (hereinafter, referred to as "ABS configuration").

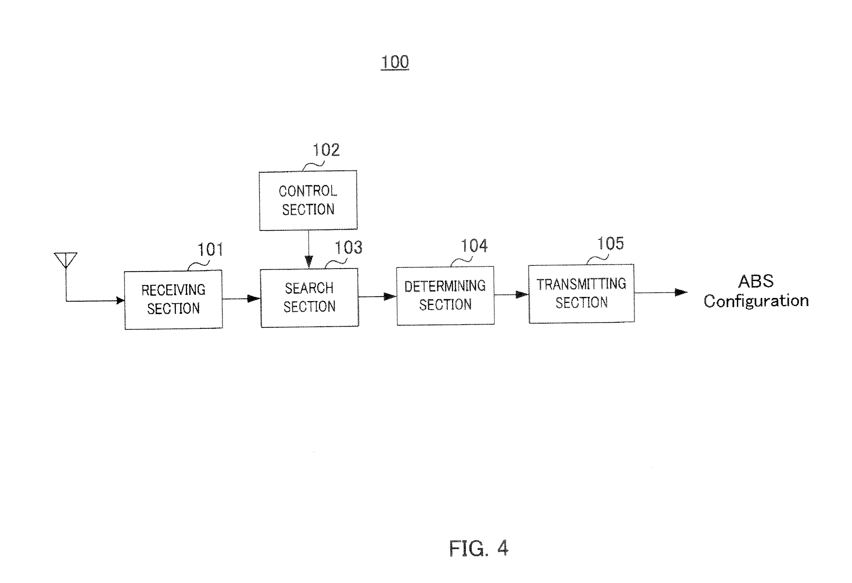

FIG. 4 is a block diagram illustrating a configuration of an HeNB (e.g., HeNB 1 and HeNB 2 illustrated in FIG. 3). HeNB 100 illustrated in FIG. 4 collects neighboring base station (MeNB and HeNB) information (such as cell IDs) as soon as turned on. HeNB 100 may collect this information periodically (e.g., daily).

Specifically, receiving section 101 in HeNB 100 illustrated in FIG. 4 receives downlink signals (downlink radio signals) from the neighboring base stations (MeNB and HeNB) as soon as HeNB 100 is turned on. The signals to be received herein include a reference signal, a synchronization signal, an ABS configuration, and the like, transmitted from other base stations, for example. The ABS configuration is transmitted on a broadcast channel (is broadcasted), for example. Receiving section 101 outputs the received downlink signals to search section 103.

Turning on HeNB 100 triggers control section 102 to instruct search section 103 to search for a base station located around HeNB 100. Control section 102 instructs search section 103 to measure a reference signal received quality (RSRQ), for example.

Search section 103 searches for a base station located around HeNB 100 and detects an ABS configuration (i.e., ABS pattern) used in the base station located around HeNB 100 in accordance with the instruction from control section 102 (i.e., turning on HeNB 100 triggers the instruction). For example, search section 103 searches for other base stations located around HeNB 100 (MeNB and HeNB) on the basis of the downlink signals (synchronization signals) received by receiving section 101. Moreover, search section 103 identifies the base station found by the search as a base station that causes interference with HeNB 100. Furthermore, search section 103 monitors a broadcast channel from the other base station found by the search and acquires an ABS configuration indicating the ABS pattern used in the base station found by the search. Moreover, search section 103 measures an RSRQ by using the reference signal from the other base station found by the search. The lower the RSRQ measurement value of the other base station is, the smaller the amount of interference between the other base station and HeNB 100 is. Search section 103 outputs the acquired ABS configuration to determining section 104. Note that, processing to search for a neighboring base station in search section 103 will be described in detail, hereinafter.

Determining section 104 determines the ABS configuration to be used in HeNB 100, on the basis of the ABS configuration acquired by search section 103. For example, determining section 104 determines any of ABS configurations different from the ABS configurations collected by search section 103, as the ABS configuration (ABS pattern) to be used in HeNB 100. Specifically, determining section 104 determines, as the ABS configuration (ABS pattern) to be used in HeNB 100, an ABS configuration other than the ABS configurations used in neighboring base stations of HeNB 100 (apparatuses which cause interference with HeNB 100). Determining section 104 outputs the determined ABS configuration (ABS pattern) to transmitting section 105. The processing to determine the ABS configuration in determining section 104 will be described in detail, hereinafter.

HeNB 100 applies the ABS configuration determined by determining section 104 to a UE (HUE) connected to HeNB 100. Accordingly, transmitting section 105 transmits signals to the terminal (HUE) connected to HeNB 100, in accordance with the ABS configuration (ABS pattern) determined by determining section 104. In addition, transmitting section 105 reports the ABS configuration (ABS configuration used in HeNB 100) received from determining section 104 to the OMC.

Next, the processing performed in HeNB 100 will be described in detail.

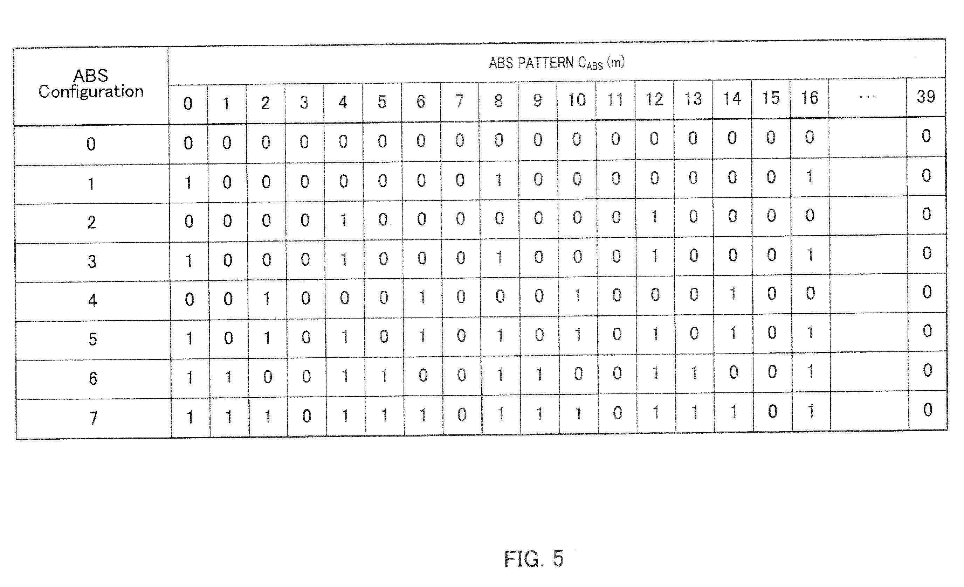

Base stations such as an MeNB and an HeNB (including HeNB 100) each have an ABS configuration table as illustrated in FIG. 5, for example. This ABS configuration table illustrated in FIG. 5 shows the association between ABS configurations (0 to 7) and ABS patterns C_{ABS} (m) (m=0 to 39). In this table, "m" represents the counter which is incremented every subframe. More specifically, the ABS patterns C_{ABS} (m) illustrated in FIG. 5 define downlink transmission/non-transmission for 40 subframes. In FIG. 5, a subframe that transmits a downlink signal (transmission subframe) is represented by "0" while a subframe where transmission of a downlink signal is stopped (non-transmission subframe) is represented by "1." For example, a downlink signal is transmitted in all subframes when the ABS configuration = 0, while transmission of a downlink signal is stopped at every eighth subframe when the ABS configuration = 1 in FIG. 5.

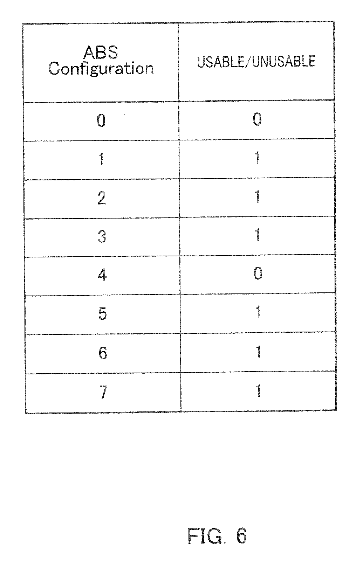

In addition, each of the base stations such as an MeNB and an HeNB (including HeNB 100) includes an ABS white list indicating ABS configurations usable by the base station, as illustrated in FIG. 6, for example. In the ABS white list illustrated in FIG. 6, when the parameter indicating whether or not the corresponding ABS configuration is usable indicates "1," this means that the ABS configuration is usable, and when the parameter indicates "0," this means that the corresponding ABS configuration is not usable. For example, ABS configurations = 0 and 4 are not usable and ABS configurations = 1, 2, 3, 5, 6, and 7 are usable in FIG. 6.

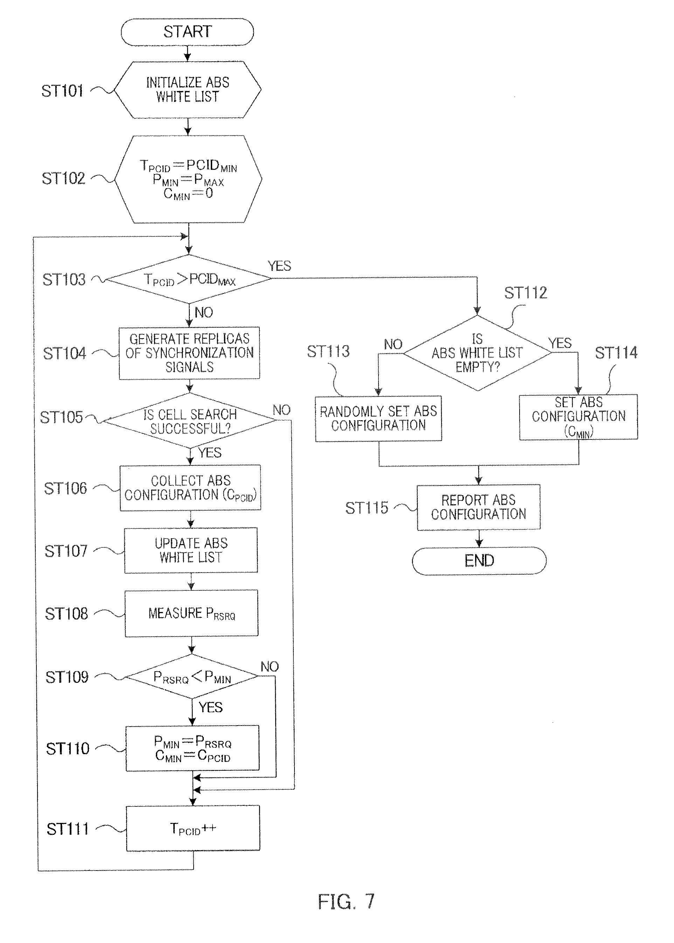

FIG. 7 illustrates a flowchart illustrating the flow of processing to search for a neighboring base station and the processing to determine an ABS configuration in HeNB 100 according to Embodiment 1. In the following description, the processing in HeNB 2 (not in operation) in FIG. 3 will be described.

In FIG. 7, search section 103 of HeNB 2 initializes the ABS white list (see, e.g., FIG. 6) in step (hereinafter, simply referred to as "ST") 101. More specifically, search section 103 initializes all the usable/unusable states of the ABS configurations illustrated in the ABS white list to all usable ("1").

In ST 102, search section 103 initializes each parameter. Specifically, search section 103 sets, as the measurement target cell ID (T_{PCID}), the smallest cell ID (PCID_{MIN}) within a range of cell IDs (PCTD_{MIN} to PCID_{MAX}) which is set as a blind detection target. In addition, search section 103 sets, as the minimum RSRQ buffer (P_{MIN}) for storing the minimum RSRQ, the maximum RSRQ (P_{MAX}) measureable by HeNB 2. In addition, search section 103 sets "0" as ABS configuration (C_{MIN}) of the base station having the minimum RSRQ. For example, the following values are set: PCID_{MIN} = 0, PCID_{MAX} = 65535 and P_{MIN} = 24 (dBm).

In ST 103, search section 103 determines whether or not the measurement target cell ID (Tp_{CID}) has exceeded PCID_{MAX}.

In ST 104, search section 103 generates replicas of the synchronization signals if measurement target cell ID (T_{PCID}) has not exceeded PCID_{MAX} (ST 103: No). There are two types of synchronization signals, which are the primary synchronization signal (PSS) and the secondary synchronization signal (SSS).

Next, in ST 105, search section 103 performs cell search using the replicas of the synchronization signals (PSS and SSS) generated in ST 104. Specifically, search section 103 performs a correlation operation between the received signal and the replicas of the synchronization signals (PSS and SSS). If the correlation value between the received signal and replicas of the synchronization signals is equal to or greater than a previously set threshold, search section 103 determines that the base station of the measurement target cell ID (T_{PCID}) is located around the base station (HeNB 2) of search section 103 (i.e., as successful cell search). Meanwhile, if the correlation value between the received signal and the replicas of the synchronization signals is less than the threshold, search section 103 determines that the base station of the measurement target cell ID (T_{PCID}) is not located around the base station (HeNB 2) of search section 103 (i.e., as cell search failure). If the cell search is successful (ST105: Yes), the processing proceeds to the process of ST 106, and if the cell search is not successful (ST105; No), the processing proceeds to the process of ST 111.

In ST 106, search section 103 monitors a broadcast channel from the base station of the measurement target cell ID (T_{PCID}) and collects the ABS configuration (C_{PCID}) used in the base station.

In ST 107, search section 103 updates the ABS white list by setting the usable/unusable state corresponding to the ABS configuration (C_{PCID}) collected in ST 106 to be unusable ('0').

In ST 108, search section 103 monitors a downlink reference signal from the base station of the measurement target cell ID (T_{PCID}) and measures an RSRQ (P_{RSRQ}).

In ST 109, search section 103 compares the RSRQ (P_{RSRQ}) measured in ST 108 with P_{MIN}. When P_{RSRQ} is smaller than P_{MIN} (ST 109: Yes), search section 103 updates P_{MIN} to P_{RSRQ}, and updates C_{MIN} to C_{PCID} in step ST 110. Repeating the processes of ST 108 to ST 110 on the measurement target base stations identifies the ABS configuration (C_{MIN}) used in the base station having the smallest RSRQ among the measurement target base stations (i.e., base station which causes the smallest amount of interference with the base station of search section 103). Meanwhile, when P_{RSRQ} is equal to or greater than P_{MIN} (ST 109: No), the processing proceeds to the process of ST 111.

In ST 111, search section 103 updates the measurement target base station by incrementing T_{PCID} indicating the measurement target cell ID and returns to the process of ST 103. Search section 103 repeats the processes of ST 103 to ST 111 until T_{PCID} becomes equal to PCID_{MAX} (until Yes in ST 103).

Upon completion of the processing to search for a neighboring base station in search section 103 (ST 103: Yes), determining section 104 determines the ABS configuration of HeNB 2. Specifically, in ST 112, determining section 104 determines whether or not there is an ABS configuration usable in the base station (HeNB 2) of determining section 104 with reference to the ABS white list updated in ST 107 (i.e., determines whether or not all ABS configurations are unusable).

If there is a usable ABS configuration (ST 112: No), determining section 104 randomly selects an ABS configuration to be used in the base station (HeNB 2) of determining section 104 from among the usable ABS configurations in the ABS white list (ABS configurations=1,2,3,5,6, and 7 in the case of FIG. 6) in ST 113. Stated differently, determining section 104 excludes the unusable ABS configurations in the ABS white list (ABS configurations=0, and 4 in the case of FIG. 6) i.e., the ABS configuration used in a neighboring base station from the ABS configuration targets (selection targets) to be used in the base station (HeNB 2). Note that, the method of determining an ABS configuration to be used in the base station (HeNB 2) is not limited to the method of randomly determining an ABS configuration, and it is also possible to select the ABS configuration having the smallest number from among usable ABS configurations, for example. In FIG. 5, a smaller ABS configuration number is associated with a smaller number of non-transmission subframes. Thus, selecting the ABS configuration of the smallest number makes it possible to reduce the number of non-transmission subframes where transmission of a downlink signal is stopped, as much as possible.

When there is no usable ABS configuration (ST 112: Yes), determining section 104 sets, in ST 114, as the ABS configuration to be used in the base station (HeNB 2) of determining section 104, the ABS configuration (C_{MIN}) of the base station corresponding to the minimum RSRQ set in ST 110. Specifically, when all of the plurality of ABS configurations (ABS patterns) are used by a plurality of other base stations, determining section 104 determines, as the ABS configuration (ABS pattern) to be used in the base station of determining section 104, the ABS configuration (ABS pattern) used in the base station which causes the smallest amount of interference with the base station of determining section 104 (i.e., base station corresponding to the minimum RSRQ) among the plurality of other base stations.

In ST 115, transmitting section 105 reports the ABS configuration used in the base station of transmitting section 105 determined by determining section 104 in ST 113 or ST 114 to the OMC.

As described above, HeNB 2 (HeNB 100) illustrated in FIG. 3 regards a base station detectable by HeNB 2 (e.g., HeNB 1), as a base station possibly interfered by HeNB 2 (HeNB 100), so that HeNB 2 (HeNB 100) sets an ABS configuration different from the ABS configuration used in this detectable base station, as the ABS configuration to be used in HeNB 2 (HeNB 100). As illustrated in FIG. 5, if base stations which interfere with each other (HeNB 1 and HeNB 2) use the same ABS configuration, non-transmission subframes completely overlap with each other between the base stations. As a result, interference between the base stations interfering with each other cannot be avoided. In this respect, different ABS configurations are used between base stations interfering with each other (e.g., HeNB 1 and HeNB 2) as illustrated in Embodiment 1. As a result, a period during which one of the base stations uses a transmission subframe while the other base station uses a non-transmission subframe can be surely secured, and interference between the base stations can be avoided. Accordingly, the interfered base station no longer has to be interfered, and the throughput of UEs located within a cell provided by the interfered base station can be improved.

Moreover, when no usable ABS configuration is found as a result of neighboring base station search (ST 112: Yes), HeNB 100 sets the ABS configuration (C_{MIN}) of the base station corresponding to the minimum RSRQ to be the ABS configuration to be used in HeNB 100 (HeNB 2). To put it more specifically, when an ABS configuration different from that of a neighboring base station cannot be set in HeNB 100, HeNB 100 sets the ABS configuration of a neighboring base station having the smallest interference with HeNB 100 (ABS configuration of the base station corresponding to the minimum RSRQ) to be used in HeNB 100. Accordingly, although HeNB 100 and the neighboring base station use the same ABS configuration, the interference between the base stations can be kept as low as possible.

Note that, HeNB 100 may determine the ABS configuration for the HeNB 100 in such a way that the ABS configuration set in HeNB 100 is different from the ABS configuration set in a base station detected by a neighboring base station search (base station that may interfere with HeNB 100). Stated differently, HeNB 100 may set an ABS configuration which is identical to the one used in a base station that has not been detected by a neighboring base station search (base station which does not cause interference with HeNB 100). Specifically, HeNB 100 (determining section 104) may determine, as the ABS configuration (ABS pattern) to be used in HeNB 100, an ABS configuration (ABS pattern) which is identical to the ABS configuration (ABS pattern) used in a base station other than a base station found by the search by HeNB 100 (search section 103) (apparatus that causes interference with HeNB 100) among a plurality of base stations (MeNB and HeNB) located in the network system (communication system). For example, N units of HeNB are located in the communication area of the MeNB, and if the N units of HeNB do not interfere with each other (none of HeNBs detects another HeNB), the same ABS configuration may be set in each of the N units of HeNB.

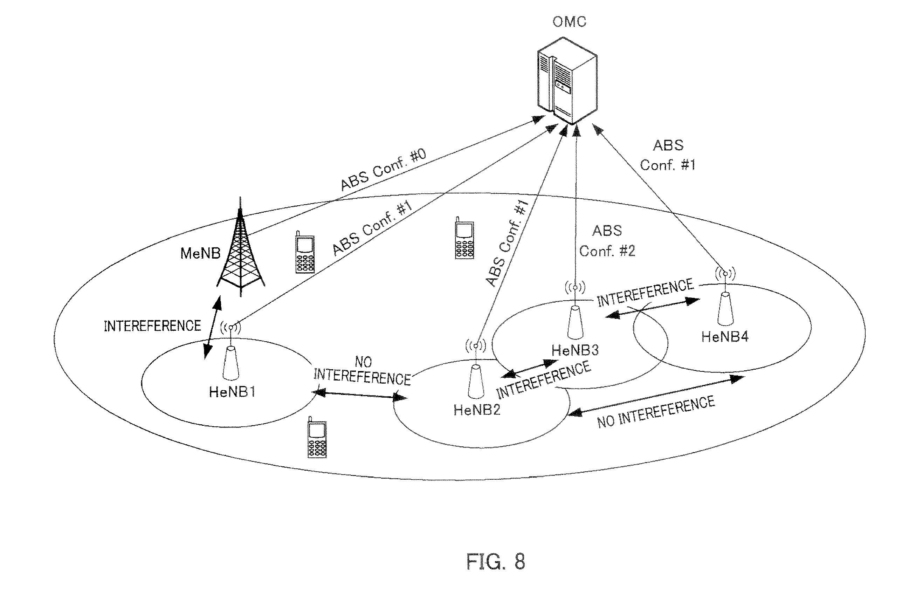

More specifically, a description will be provided regarding a network system in which HeNBs 1 to 4 are installed in the communication area of an MeNB as illustrated in FIG. 8, for example. In FIG. 8, HeNB 1 may interfere with the MeNB but does not interfere with HeNBs 2 to 4. In this respect, HeNB 1 sets an ABS configuration (ABS Conf. #1) different from an ABS configuration (ABS Conf. #0) of the MeNB. In this case, HeNB 1 may set the same ABS configuration as that set in HeNBs 2 to 4 (ABS Conf. #1 set in HeNB 2 and HeNB 4 in the case of FIG. 8), which do not interfere with HeNB 1. Likewise, in FIG. 8, HeNB 4 may set the same ABS configuration as that set in HeNB 1 and HeNB 2 which do not interfere with HeNB 4 (ABS Conf. #1 of HeNB 1 and HeNB 2 in FIG. 8). Likewise, the other base stations (MeNB, HeNB 2, and HeNB 3) may also set an ABS configuration for the base stations in the same manner.

As described above, in this embodiment, each base station determines an ABS configuration to be used in the base station from among a plurality of ABS configurations (ABS patterns) on the basis of the presence or absence of interference between the base station and the other base stations. Specifically, in this embodiment, each base station identifies a neighboring base station detectable by the base station as an apparatus that causes interference with the base station and sets, in the base station, an ABS configuration different from the ABS configuration used in the neighboring base station. Accordingly, each base station independently sets the most appropriate ABS configuration for the base station. As a result, interference between the base stations can be kept as low as possible. In addition, unlike NPL 1, applying ABSs not only to an MeNB but also to HeNBs makes it possible to decrease the number of non-transmission subframes in the MeNB and thus to improve the throughput of the whole network.

As described above, according to Embodiment 1, the interference between base stations (MeNB and HeNBs) is kept as low as possible, and the throughput of the whole network can be thus improved.

Embodiment 1 has been described with a case where search section 103 searches for a neighboring base station, first (performs cell search first), and then, determining section 104 monitors the ABS configuration of the neighboring base station as illustrated in FIG. 7. However, HeNB 100 may monitor an ABS configuration of a neighboring base station in parallel with search for a neighboring base station. In this manner, the processing amount of the neighboring base station search processing and the ABS configuration monitoring processing can be further reduced.

### (Embodiment 2)

While the HeNBs perform search for a neighboring base station in Embodiment 1, HeNBs do not perform search for a neighboring base station in Embodiment 2.

Hereinafter, Embodiment 2 will be specifically described.

The HeNBs according to Embodiment 2 are different from HeNB 100 according to Embodiment 1 illustrated in FIG. 4 in that the HeNBs according to Embodiment 2 are each configured without control section 102 and search section 103, for example.

Determining section 104 according to Embodiment 2 first sets an ABS configuration having the smallest number (ABS configuration in FIG. 5), for example, among ABS configurations that can be set in the HeNB according to Embodiment 2 (ABS configurations=0 to 7 in FIG. 5) to be the ABS configuration candidate for the HeNB. Next, determining section 104 measures the amount of interference from another base station (MeNB or HeNB) using the downlink signal received by receiving section 101. When the measured amount of interference is equal to or greater than a previously set threshold (allowable amount of interference), determining section 104 increments the currently set ABS configuration candidate and sets a new ABS configuration candidate. Meanwhile, when the measured amount of interference is less than the threshold, determining section 104 sets the currently set ABS configuration candidate to be the ABS configuration for the base station. Accordingly, determining section 104 determines an ABS configuration (ABS pattern) which makes the amount of interference from a base station other than the base station of determining section 104 less than the threshold (allowable value) to be the ABS configuration (ABS pattern) to be used in the base station thereof from among a plurality of ABS configurations (ABS patterns).

In addition, transmitting section 105 reports the ABS configuration finally determined by determining section 104 to the OMC.

As described above, in Embodiment 2, each base station determines an ABS configuration to be used in the base station from among a plurality of ABS configurations (ABS patterns) on the basis of the presence or absence of interference between the base station and the other base stations. Specifically, in Embodiment 2, each base station uses an ABS configuration which involves a small amount of interference with the other base stations (the amount of interference is less than the threshold). Thus, as in the case of Embodiment 1, the state in which one of the base stations uses a transmission subframe while another base station uses a non-transmission subframe can be surely secured, and the interference between base stations can be limited. Accordingly, the interfered base station no longer has to be interfered, and the throughput of UEs located in the cell provided by the interfered base station can be improved.

In Embodiment 2, when the amount of interference becomes equal to or greater than the threshold with all the ABS configurations, HeNB 100 may set an ABS configuration corresponding to the smallest amount of interference to be the ABS configuration used in the base station. Specifically, even when the HeNB cannot set the amount of interference with another base station to be less than the allowable value, the HeNB can keep the interference with the other base station as low as possible by setting the ABS configuration corresponding to the lowest amount of interference.

As described above, according to Embodiment 2, it is possible to keep interference between base stations (MeNB and HeNB) as low as possible and thus to improve the throughput of the whole network.

Each of the embodiments of the present invention has been described above.

Note that, in each of the embodiments, a description has been provided with the assumption that an HeNB is configured to acquire neighboring base station information when the HeNB is turned on. However, the HeNB may be configured to acquire the neighboring base station information periodically, such as daily.

In addition, each of the embodiments has been described with a case where HeNBs report an ABS configuration to the OMC. However, each HeNB may report an ABS pattern consisting of a total of 40 bits as illustrated in FIG. 5 directly to the OMC, for example.

The disclosure of the specification, the drawing, and the abstract of Japanese Patent Application No. 2011-027449, filed on February 10, 2011, is incorporated herein by reference in its entirety.

### Industrial Applicability

The present invention is suitable for a mobile communication system including an MeNB, an MUE, an HeNB and an HUE.

### Reference Signs List

100 HeNB
101 Receiving section
102 Control section
103 Search section
104 Determining section
105 Transmitting section

## Claims

1. A base station apparatus in a communication system including a plurality of base station apparatuses each being configured to transmit a signal using one of a plurality of different subframe configuration patterns, each of the plurality of different subframe configuration patterns being represented by a combination of a transmission subframe that transmits a signal and a non-transmission subframe that stops transmission of a signal, the base station apparatus comprising:
a determining section configured to determine a subframe configuration pattern to be used in the base station apparatus of the determining section from among the plurality of subframe configuration patterns on a basis of the presence or absence of interference between the base station apparatus thereof and another one or more of the base station apparatuses; and
a transmitting section configured to transmit a signal to a terminal apparatus connected to the base station apparatus of the transmitting section, in accordance with the determined subframe configuration pattern.

2. The base station apparatus according to claim 1, further comprising a search section configured to search for the other base station apparatus located around the base station apparatus of the search section, that acquires a subframe configuration pattern used in the other base station apparatus found by the search, and that identifies the other base station apparatus found by the search as an apparatus that causes interference with the base station apparatus of the search section, wherein
the determining section is configured to determine a subframe configuration pattern different from the subframe configuration pattern used in the other base station apparatus, as the subframe configuration pattern to be used in the base station apparatus of the determining section, from among the plurality of subframe configuration patterns.

3. The base station apparatus according to claim 2, wherein the search section is configured to acquire a subframe configuration pattern used in the other base station apparatus, on an event that the base station apparatus of the search section is turned on, the event serving as a trigger for the search section to acquire the subframe configuration pattern.

4. The base station apparatus according to claim 2, wherein the determining section is configured to determine, when the plurality of subframe configuration patterns are all used by a plurality of the other base station apparatuses, a subframe configuration pattern used in a base station apparatus which causes the smallest amount of interference with the base station apparatus of the determining section from among the plurality of other base station apparatuses, as the subframe configuration pattern to be used in the base station apparatus of the determining section.

5. The base station apparatus according to claim 2, wherein the determining section is configured to determine, as the subframe configuration pattern to be used in the base station apparatus of the determining section, a subframe configuration pattern identical to a subframe configuration pattern used in a different base station apparatus than the other base station apparatus found by the search performed by the search section, from among the plurality of base station apparatuses located in the communication system.

6. The base station apparatus according to claim 1, wherein the determining section is configured to determine, as the subframe configuration pattern to be used in the base station apparatus of the determining section, a subframe configuration pattern which makes the amount of interference from the other base station apparatus less than a predetermined allowable value, from among the plurality of subframe configuration patterns.

7. The base station apparatus according to claim 1, wherein the transmitting section is further configured to report the determined subframe configuration pattern to a management apparatus that manages setting of subframe configuration patterns used in a plurality of base station apparatuses.

8. A transmission method in a communication system including a plurality of base station apparatuses each configured to transmit a signal using one of a plurality of different subframe configuration patterns, each of the plurality of different subframe configuration patterns being represented by a combination of a transmission subframe that transmits a signal and a non-transmission subframe that stops transmission of a signal, the method comprising:
determining a subframe configuration pattern to be used in a specific one of the base station apparatuses from among the plurality of subframe configuration patterns on a basis of the presence or absence of interference between the specific one of the base station apparatuses and another one or more of the base station apparatuses; and
transmitting a signal to a terminal apparatus connected to the specific one of the base station apparatuses, in accordance with the determined subframe configuration pattern.
